# EUROPÄISCHE PATENTSCHRIFT

(11) **EP 2 870 392 B1**
(45) Veröffentlichungstag und Bekanntmachung des Hinweises auf die Patenterteilung: **19.12.2018**
(21) Anmeldenummer: 13723815.0
(22) Anmeldetag: 22.05.2013
(51) Int. Cl.: F16K 31/06, F01M 1/16

(54) **VENTILVORRICHTUNG FÜR EINEN HYDRAULIKKREISLAUF SOWIE ÖLPUMPENREGELANORDNUNG**
VALVE DEVICE FOR A HYDRAULIC CIRCUIT AND OIL PUMP CONTROL SYSTEM
DISPOSITIF DE DISTRIBUTION POUR UN CIRCUIT HYDRAULIQUE ET SYSTÈME DE CONTRÔLE DE POMPE A HUILE

(30) Priorität: 04.07.2012 DE 102012105972
(43) Veröffentlichungstag der Anmeldung: 13.05.2015
(73) Patentinhaber: Pierburg GmbH, 41460 Neuss (DE)
(72) Erfinder: LAPPAN, Rolf, 50733 Köln (DE); SADOWSKI, Christoph, 45549 Sprockhövel (DE); ROMANOWSKI, Lukas, 49090 Osnabrück (DE); YILMAZ, Turgut, 50739 Köln (DE)
(74) Vertreter: Patentanwälte ter Smitten Eberlein-Van Hoof Rütten Partnerschaftsgesellschaft mbB
(86) Internationale Anmeldenummer: PCT/EP2013/060474
(87) Internationale Veröffentlichungsnummer: WO 2014/005758

(56) Entgegenhaltungen:
- DE-A1- 3 402 119
- DE-A1- 4 231 998
- DE-A1- 4 324 589
- DE-A1- 19 829 549
- US-A- 4 071 042
- US-A- 4 579 145
- US-A- 4 744 389
- US-A1- 2002 007 857

## Beschreibung

Die Erfindung betrifft eine Ventilvorrichtung für einen Hydraulikkreislauf mit einer Aktoreinheit mit einem elektromagnetischen Kreis bestehend aus einem translatorisch bewegbaren Anker, einem Kern, einer bestrombaren Spule, die auf einem Spulenträger angeordnet ist und Flussleiteinrichtungen, einer Ventileinheit mit einem Regelschieber, der mit dem Anker verbunden ist, einem Auslassanschluss, einem weiter als der Auslassanschluss von der Aktoreinheit entfernten Einlassanschluss und einem zwischen Einlassanschluss und Auslassanschluss angeordneten Regelanschluss, dessen fluidische Verbindung zum Einlassanschluss und zum Auslassanschluss über den Regelschieber absperrbar oder freigebbar ist, sowie eine Ölpumpenregelanordnung mit einer derartigen Ventilvorrichtung, einer variablen Ölpumpe mit einer Steuerkammer und einer Ölwanne.

Derartige Ventilvorrichtungen dienen zur Drucksteuerung hydraulischer Steller beispielsweise in Steuerungen für Automatikgetriebe oder zur Regelung des Druckes in einer Steuerkammer einer variablen Ölpumpe eines Ölkreislaufs zur Schmierung eines Verbrennungsmotors eines Kraftfahrzeugs. Dabei wird über den Druck in der Steuerkammer ein Ring einer Förderkammer, auf dem der Rotor einer Flügelzellen- oder Zahnradpumpe abrollt, verschoben oder verdreht, wodurch das Fördervolumen geändert wird.

Die zu diesen Zwecken verwendeten Druckregelventile werden beispielsweise als Mehrwege-Elektromagnetventile ausgeführt, mittels derer die Pumpenregelkammer entweder über die Ölwanne entlastet werden kann oder mit zusätzlichem Druck aus dem Förderdruck der Ölpumpe belastet werden kann. Zusätzlich werden im Regelkreis häufig Überdruckventile eingebaut, die den maximalen Förderdruck begrenzen.

Ein solches System zum Steuern des Druckes in zwei Steuerkammern einer Ölpumpe mit einem Elektromagnetventil ist beispielsweise aus der DE 11 2008 000 978 T5 bekannt. Dabei wird abhängig vom Förderdruck und der Stellung des Regelschiebers des Elektromagnetventils der Differenzdruck zwischen den beiden Steuerkammern verändert. Zusätzlich weist dieses System ein Überdruckventil auf, über welches bei zu hohem Förderdruck das Öl von der Druckseite der Pumpe zur Saugseite zurückgeführt werden kann. Nachteilig ist hier die Verwendung eines zusätzlichen Überdruckventils.

Ein die Funktion des Überdruckventils integrierendes Elektromagnetventil ist aus der DE 103 30 779 A1 bekannt. Dieses weist ein elektromagnetisch betätigbares Ventilglied auf, welches einen Durchströmungsquerschnitt zwischen einem Regelanschluss und einem Auslass beherrscht, indem ein Anker des Elektromagneten, der mit einem Ventilschließglied verbunden ist und von einem Federelement belastet wird, translatorisch bewegt wird. Zusätzlich weist das Ventil eine federbelastete Kugel als zweiten Schließkörper zwischen einem Einlassanschluss und dem Regelanschluss auf, so dass der Regelanschluss mit dem Druck aus dem Einlassanschluss versorgt werden kann.

Dieses Ventil weist jedoch den Nachteil auf, dass eine Abhängigkeit von der Größe des vorhandenen Förderdrucks zur notwendigen Ankeröffnungskraft besteht. Somit müssen die Rückstellfeder und der Elektromagnet an die vorhandenen Kräfte angepasst werden.

Des Weiteren ist aus der DE 101 10 174 A1 ein als Schaltventil ausgeführtes Elektromagnetventil bekannt, welches einen Ventilschieber aufweist, über den die fluidischen Verbindungen zwischen einem Arbeitsanschuss sowie einem Einlassanschluss und einem Auslassanschluss freigegeben werden können oder abgesperrt werden können. Dabei sollen die notwendigen Stellkräfte durch die Anordnung von Drosseln zum Auslass reduziert werden. Dieses Ventil ist jedoch nicht druckausgeglichen und weist keine fail-safe Funktion zum Verhindern zu großer Förderdrücke auf. Neben der elektromagnetischen Kraft wirkt lediglich eine in Schließrichtung des Einlasses wirkende Federkraft.

Die US 4,579,145 B offenbart zusätzlich ein elektromagnetisch betätigtes Ventil, welches einen vom Regelschieber getrennten Anker aufweist. Der Steuerkolben wird mit dem am Regelanschluss anliegenden Druck beaufschlagt. Eine fail-safe Funktion dieses Ventils wird nicht offenbart.

Des Weiteren ist aus der US 4,071,042 ein Elektromagnetventil bekannt, welches einen von der Aktoreinheit entfernten Einlassanschluss, einen zur Aktoreinheit gerichteten Auslassanschluss und einen zwischen Einlassanschluss und Auslassanschluss angeordneten Regelanschluss aufweist, der je nach Stellung des Steuerkolbens mit dem Einlassanschluss oder mit dem Auslassanschluss verbunden ist. Des Weiteren befindet sich ein weiterer Auslassanschluss zwischen dem Einlassanschluss und einem Steuerkolben am axialen Ende des Ventils, der mit dem Regeldruck beaufschlagt wird.

Es bleibt somit festzuhalten, dass die bekannten Elektromagnetventile entweder bei Verwendung in anderen Druckbereichen sehr große Betätigungskräfte benötigen, so dass andere Elektromagneten verwendet werden müssen, oder keine Überdruckfunktion beinhalten.

Es stellt sich daher die Aufgabe, eine Ventilvorrichtung sowie eine Ölpumpenregelanordnung mit einer derartigen Ventilvorrichtung bereit zu stellen, bei der die Funktion des Überdrucköffnens und des Druckregelns in einer Ventilvorrichtung vereinigt werden, wobei die Ventilvorrichtung weitestgehend unabhängig vom geforderten Überdruck mit kleinen Stellkräften und somit Elektromagneten betrieben werden können soll. Des Weiteren soll eine Anpassung von Stellkräften möglich sein. Die Ventilvorrichtung soll eine lange Lebensdauer aufweisen und einfach zu montieren sein.

Diese Aufgaben werden durch eine Ventilvorrichtung mit den Merkmalen des Anspruchs 1 und eine Ölpumpenregelanordnung mit den Merkmalen des Anspruchs 15 gelöst.

Durch die besondere Anordnung der Ein- und Auslässe zueinander und dadurch, dass der Anker mittels eines Federelements in Öffnungsrichtung des Einlassanschlusses belastet ist und mittels des elektromagnetischen Kreises sowie mittels eines Steuerkolbens, der mit dem gleichen Druck wie der Einlassanschluss beaufschlagt ist, so dass er mit einer vom Druck am Einlassanschluss abhängigen hydraulischen Kraft beaufschlagt ist, über den Regelschieber in Öffnungsrichtung des Auslassanschlusses belastbar ist, wird es möglich, die Wirkfläche des Steuerkolbens je nach gewünschtem Überdruck anzupassen, ohne dabei den geforderten Öldurchsatz zu beeinflussen. So kann durch Anpassung der Wirkfläche des Steuerkolbens eine einheitliche Aktoreinheit mit kleinen Stellkräften für verschiedene Druckniveaus verwendet werden. Auch kann eine hohe Stellgeschwindigkeit sichergestellt werden.

Bei der Verwendung dieses Ventils als Regelventil in einem Ölkreislauf einer Verbrennungskraftmaschine ist der Regelanschluss mit der Steuerkammer der Ölpumpe verbunden, der Auslassanschluss mit der Ölwanne verbunden und der Einlassanschluss und der Steuerkolben mit dem Förderdruck der Ölpumpe beaufschlagt. Mit dieser Anordnung besteht die Möglichkeit einer vollständigen Druckregelung des Ölkreislaufs und gleichzeitiger fail-safe Funktion zur Verhinderung zu großer Öldrücke.

Vorzugsweise weist der Regelschieber eine erste Steuerfläche auf, die zum Verschluss der fluidischen Verbindung zwischen dem Einlassanschluss und dem Regelanschluss dient und eine zweite Steuerfläche aufweist, die zum Verschluss der fluidischen Verbindung zwischen dem Auslassanschluss und dem Regelanschluss dient, wobei der Abstand der beiden Steuerflächen zueinander geringer ist als der Abstand des Einlassanschlusses zum Auslassanschluss. Entsprechend kann sich ein Gelichgewichtszustand zwischen elektromagnetischer Kraft, Federkraft und auf den Steuerkolben wirkender Kraft aufgrund des hydraulischen Druckes einstellen, in dem beide fluidischen Verbindungen verschlossen sind, was bedeutet, dass der Ölförderverlust deutlich reduziert wird, das ein stetiges Öffnen und Schließen, wie dies bei anderen Ventilen auftritt, und der daraus resultierende Ölfluss zum Tank verhindert wird.

In einer Weiterbildung der Erfindung sind die Steuerflächen zylindrisch ausgebildet, so dass über eine definierte Verschiebestrecke ein Verschluss einer fluidischen Verbindung zuverlässig aufrecht erhalten werden kann, da der Strömungswiderstand erhöht wird.

In einer besonders bevorzugten Ausführungsform liegt das Federelement an seinem zum Anker entgegengesetzten Ende gegen einen Absatz einer Einstellschraube an, welche in einer Gewindebohrung im Kern befestigt ist. So kann eine Federkrafteinstellung vorgenommen werden, die es ermöglicht, bei gleichen Einzelteilen in der Aktoreinheit unterschiedliche Druckbereiche einzustellen, ohne dabei den möglichen Öldurchsatz zu beeinflussen. Fertigungsstreuungen der Federkräfte können mittels der Einstellschraube ausgeglichen werden.

In einer hierzu weiterführenden Ausbildung erstreckt sich vom Absatz der Einstellschraube ein Vorsprung in Richtung des Ankers, der von dem Federelement umgeben ist. So wird auf einfache Weise ein Knicken des Federelementes verhindert und somit die Funktionssicherheit erhöht.

Vorteilhafterweise sind am Kern nicht magnetisierbare Anschlagmittel befestigt, gegen die der Anker in seiner vollständig angezogenen Position anliegt. Dies verhindert ein Festhängen des magnetisierten Ankers am Kern oder am Anschlagmittel, wenn dieses aus magnetisierbarem Material bestehen würde. Entsprechend können die Federkräfte reduziert werden.

In einer hierzu weiterführenden vorteilhaften Ausbildung der Erfindung dient eine Anschlaghülse als Anschlagmittel, welche in einer Bohrung des Kerns angeordnet Ist. Dies vereinfacht die feste Montage dieses Anschlagmittels am Kern beispielsweise durch Einpressen, so dass keine zusätzlichen Bauteile verwendet werden müssen.

In einer wiederum weiterführenden Ausbildung umgibt die Anschlaghülse einen axialen Abschnitt des Federelements radial, so dass die Hülse gleichzeitig als äußere Führung des Federelementes dient.

Besonders vorteilhaft ist es, wenn der Regelschieber und der Anker eine Durchgangslängsbohrung aufweisen, über welche ein Aktorraum zwischen dem Anker und dem Kern fluidisch mit einem Ventilraum am zur Aktoreinheit entgegengesetzten Ende des Regelschiebers verbunden ist. So besteht an beiden axialen Enden der Einheit aus Anker und Regelschieber immer ein gleicher Druck. Bei Ausbildung gleicher wirksamer Kraftangriffsflächen kann auch ein Kräftegleichgewicht hergestellt werden, wodurch eine schnelle Betätigung des Ventils bei kleinen wirksamen Kräften möglich wird.

In einer vorteilhaften Weiterbildung weist der Regelschieber eine Querbohrung aufweist, über die die Durchgangslängsbohrung mit dem Auslassanschluss verbunden ist, so dass immer gleichbleibender Atmosphärendruck an den axialen Enden anliegt.

Vorzugsweise ist im Ventilraum der Steuerkolben gelagert, so dass dieser lediglich über die Druckdifferenz des Einlassdruckes zum Atmosphärendruck belastet ist. So werden unabhängig vom Einlassdruck wechselnde Differenzdrücke verhindert.

In einer weiteren vorteilhaften Ausführungsform ist eine der Flussleiteinrichtungen als Rückschlussbuchse ausgebildet, welche einen ersten axialen Abschnitt aufweist, der radial innerhalb des Spulenträgers angeordnet ist und einen zweiten axialen Abschnitt aufweist, der einen Abschnitt eines Ventilgehäuses der Ventileinheit radial umgibt. So wird mit einem Bauteil gleichzeitig der magnetische Rückschluss hergestellt als auch eine zuverlässige und dichte Verbindung zwischen Aktoreinheit und Ventileinheit ermöglicht. Dies verringert den Montageaufwand.

Vorzugsweise ist zur Reduzierung von Reibungskräften radial innerhalb des ersten Abschnitts der Rückschlussbuchse eine Gleitbuchse angeordnet ist, in welcher der Anker gelagert ist.

Damit die Ventilvorrichtung zur Regelung von Öldrücken verwendet werden kann, sind zwischen dem Kern und dem Spulenträger, zwischen der Einstellschraube und dem Kern und zwischen dem Spulenträger und der Rückschlussbuchse Dichtringe angeordnet. Auf diese Weise werden Leckagen und somit ein Austreten von Öl aus dem Ventil verhindert.

Es wird somit eine Ventilvorrichtung geschaffen, welche die Funktionen eines Überdruckventils und eines Druckregelventils in sich vereinigt, wobei eine Einheitsspule für verschiedene Druckniveaus verwendet werden kann, da die Spule bei Anpassung des Wirkquerschnitts des Steuerkolbens unabhängig vom vorhandenen Druckniveau arbeitet. Durch korrekte Auslegung und Einstellung des Federelementes können die notwendigen elektromagnetischen Stellkräfte gering gehalten werden. Entsprechend kann eine Ölpumpenregelung mit schneller Anpassung der zu fördernden Ölmenge vorgenommen werden, bei der zusätzlich eine fail-safe Funktion vorhanden ist.

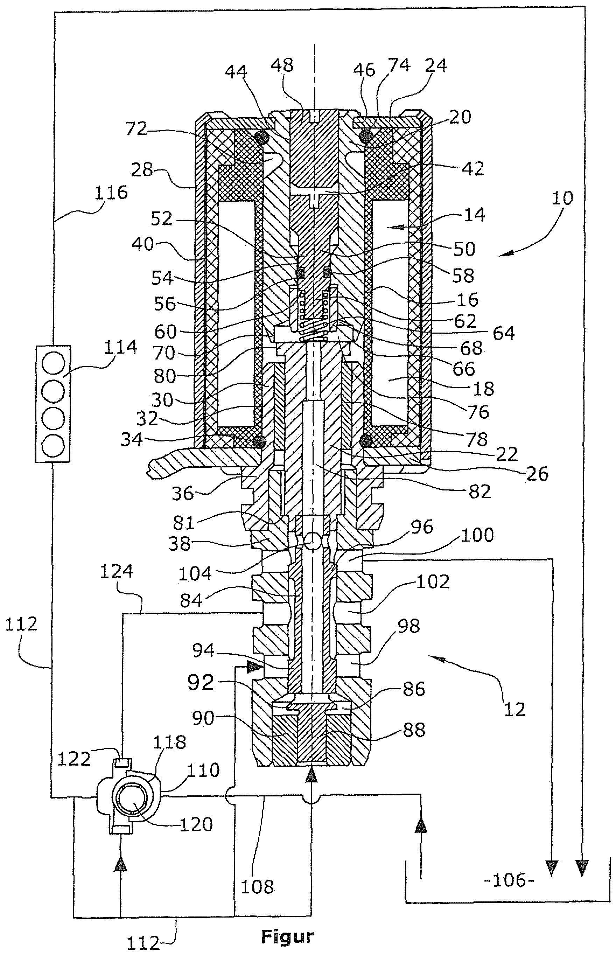

Ein Ausführungsbeispiel einer erfindungsgemäßen Ventilvorrichtung und der zugehörigen Ölpumpenregelanordnung ist in der Figur dargestellt und wird nachfolgend beschrieben.

Die Figur zeigt eine Seitenansicht einer erfindungsgemäßen Ventilvorrichtung in geschnittener Darstellung mit schematisch dargestellter Anbindung an einen Ölkreislauf einer Verbrennungskraftmaschine.

Die erfindungsgemäße, in der Figur dargestellte Ventilvorrichtung besteht aus einer Aktoreinheit 10, an der eine Ventileinheit 12 befestigt ist. Die Aktoreinheit 10 weist einen elektromagnetischen Kreis 14 auf, welcher aus einer auf einen Spulenträger 16 gewickelten Spule 18, einem Kern 20 im Innern des Spulenträgers 16, einem translatorisch bewegbaren Anker 22 und den elektromagnetischen Kreis 14 vervollständigende Flussleiteinrichtungen besteht. Diese sind zwei an den axialen Enden der Spule 18 angeordnete Rückschlussbleche 24, 26, die in leitender Verbindung mit einem die Spule 18 außen umgebenden Joch 28 stehen, sowie eine in das Innere der Spule 18 und mit dem unteren Rückschlussblech 26 verbundene Rückschlussbuchse 30, deren erster axialer Abschnitt 32 im radial Innern des Spulenträgers 16 unter Zwischenlage eines Dichtringes 34 befestigt ist und deren sich daran axial anschließender zweiter Abschnitt 36 sich in Richtung der Ventileinheit 12 erstreckt und einen Abschnitt eines Ventilgehäuses 38 der Ventileinheit 12 zur Befestigung des Ventilgehäuses 12 an der Aktoreinheit 10 radial umgibt. Die Spule 18 ist von einem Kunststoffmantel 40 umgeben, der auch einen nicht dargestellten Steckerteil zur elektrischen Versorgung der Spule 18 aufweist.

Der Kern 20 weist eine sich axial erstreckende zentrale abgestufte Durchgangsbohrung 42 auf, deren von der Ventileinheit 12 entfernter Abschnitt als Gewindebohrung 44 ausgeführt ist und ist im Spulenträger 16 befestigt. An seinem zur Ventileinheit 12 abgewandten Ende weist der Kern 20 am Außenumfang eine umlaufende Aussparung 46 auf, in die das Rückschlussblech 24 zur Befestigung dessen umlaufend ragt.

In die Gewindebohrung 44 des Kerns 20 ist eine Kernschraube 48 eingedreht, über welche die magnetische Kraft des elektromagnetischen Kreises 14 eingestellt werden kann. Im näher zur Ventileinheit 12 angeordneten Abschnitt der Gewindebohrung 44 ist eine weitere Einstellschraube 50 angeordnet, deren Schraubenschaft 52 kein Gewinde aufweist und sich durch eine Einschnürung 54 der Durchgangsbohrung 42 in Richtung der Ventileinheit 12 erstreckt. Der Schraubenschaft 52 weist eine Umfangsnut 56 auf, in der ein Dichtring 58 angeordnet ist, dessen radial äußerer Bereich gegen die Innenwand des Kerns 20 anliegt. Der Schraubenschaft 52 weist hinter der Einschnürung 54 der Durchgangsbohrung 42 des Kerns 20 einen Absatz 60 auf, von dem aus sich in Axialrichtung ein Vorsprung 62 geringeren Umfangs in Richtung der Ventileinheit 12 erstreckt. Gegen diesen Absatz 60 liegt ein Federelement 64 an, dessen gegenüberliegendes axiales Ende unter Vorspannung gegen den Anker 22 anliegt. Durch Eindrehen oder Herausdrehen der Einstellschraube 50 kann entsprechend die Federkraft, welche auf den Anker 22 wirkt, eingestellt werden und somit den jeweiligen Anforderungen angepasst werden.

Das Federelement 64 umgibt den Vorsprung 62 radial und wird von einer als Anschlagmittel dienenden nicht magnetisierbaren Anschlaghülse 66 radial umgeben, welche in vorliegender Ausführung als Hohlzylinder ausgebildet ist und über eine Pressverbindung in der Durchgangsbohrung 42 an der zur Gewindebohrung 44 axial entgegengesetzten Seite der Einschnürung 54 befestigt ist. Die Anschlaghülse 66 ist derart in der Durchgangbohrung 42 angeordnet, dass es die translatorische Bewegung des Ankers 22 in Richtung zum Kern 20 begrenzt. Dies bedeutet, dass ein Anschlag des Ankers 22 am Kern 20 vermieden wird und ein Spalt 68 auch im angezogenen Zustand des Ankers 22 verbleibt.

Bei Bestromung der Spule 18 entsteht eine magnetische Anziehungskraft zwischen dem Anker 22 und dem Kern 20, der zur Bündelung der axial verlaufenden magnetischen Feldlinien einen ringförmigen spitz zulaufenden Vorsprung 70 aufweist, In dessen Inneres ein axiales Ende des Ankers 22 bei Bestromung der Spule 18 eintaucht. Axial in Höhe der Kernschraube 48 weist der Kern 20 eine umlaufende Aussparung 72 auf, die eine Streuung der Magnetfeldlinien im Kern 20 verhindert und so die Feinjustierung über die Kernschraube 48 verbessert. Des Weiteren ist zwischen dem Kern 20 und dem Spulenträger 16 im Bereich zwischen der Aussparung 72 und der Aussparung 46 ein weiterer Dichtring 74 angeordnet, über den gemeinsam mit den Dichtringen 34, 58 ein Aktorraum 76 im Innern der Aktoreinheit 10 zwischen Spulenträger 16, Kern 20 und Anker 22 nach außen abgedichtet wird.

Der Anker 22 ist in einer Gleitbuchse 78 geführt, welches im radial Inneren des ersten Abschnitts 32 der Rückschlussbuchse 30 angeordnet ist. Der Anker 22 weist eine ringförmige Erweiterung 80 auf, die zum Kern 20 gerichtet ist und gegen welche das Federelement 64 anliegt. Der Durchmesser dieser ringförmigen Erweiterung 80 ist geringfügig kleiner als der Innendurchmesser des ringförmigen Vorsprungs 70 des Kerns 20, so dass der Anker 22 mit dieser Erweiterung 80 bei Betätigung des Elektromagneten in den Kern 20 eintaucht. Zur entgegengesetzten Seite wird die Bewegung des Ankers 22 durch einen Anschlag 81 am Ventilgehäuse 38 beschränkt, wenn lediglich die Federkraft den Anker 22 in Richtung der Ventileinheit 12 verschiebt.

Des Weiteren weist der Anker 22 eine Durchgangstängsbohrung 82 auf, die sich auch durch einen am Anker 22 befestigen Regelschieber 84 der Ventileinheit 12 bis in einen Ventilraum 86 erstreckt, so dass im Ventilraum 86 und im Aktorraum 76 immer der gleiche Druck herrscht. Im Ventilraum 86, welcher am zum von der Rückschlussbuchse 30 entgegengesetzten axialen Ende des Ventilgehäuses 38 ausgebildet ist, ist ein Steuerkolben 88 in einer Gleitbuchse 90 axial gleitend gelagert, welche am Ventilgehäuse 38 befestigt ist. Die von der Aktoreinheit entfernte axiale Öffnung des Ventilgehäuses 38 wird durch die Gleitbuchse 90 und den Steuerkolben 88 verschlossen, welcher an seiner in den Ventilraum 86 weisenden Seite eine radiale Erweiterung 92 aufweist, mittels derer der Steuerkolben 88 gegen herausfallen gesichert ist.

Der Steuerkolben 88 liegt üblicherweise axial gegen den Regelschieber 84 an, welcher Im Ventilgehäuse 38 über zwei Steuerflächen 94, 96 gelagert ist. Das Ventilgehäuse 38 weist drei seitliche Öffnungen auf. Eine erste Öffnung bildet den Einlassanschluss 98 und ist am zur Aktoreinheit 10 entfernten Bereich des Ventilgehäuses 38 ausgebildet. Am nächsten zur Aktoreinheit 10 ist ein durch die zweite Öffnung gebildeter Auslassanschluss 100 angeordnet. Die dritte Öffnung dient als Regelanschluss 102 und ist zwischen dem Einlassanschluss 98 und dem Auslassanschluss 100 angeordnet. Die beiden Steuerflächen 94, 96 des Regelschiebers 84 sind durch zylindrische Erweiterungen am Regelschieber 84 ausgebildet, deren Außendurchmesser dem Innendurchmesser des Ventilgehäuses 38 entspricht. Der Abstand der beiden Steuerflächen 94, 96 zueinander ist geringfügig kleiner als der Abstand des Einlassanschlusses 98 zum Auslassanschluss 100. Die erste Steuerfläche 94 weist eine Höhe auf, die größer ist als der Querschnitt des Einlassanschlusses 98 und ist am axial von Anker 20 entfernten Ende des Regelschiebers 84 ausgebildet. Die Höhe der zweiten Steuerfläche 96 ist geringer als der Querschnitt des Auslassanschlusses 100, so dass er lediglich geeignet ist, eine fluidische Verbindung zum Regelanschluss 102 zu unterbrechen.

Am Regelschieber 84 ist auch am zur Aktoreinheit 10 weisenden Seite der zweiten Steuerfläche 96 eine Querbohrung 104 ausgebildet, die mit der Durchgangslängsbohrung 82 verbunden ist, so dass im Ventilraum 86 und im Aktorraum 76 immer der am Auslassanschluss 100 anliegende Druck herrscht.

Die Funktion dieser Ventilvorrichtung als Ölpumpenregelung wird im Folgenden anhand des Ölkreislaufs einer Verbrennungskraftmaschine erklärt.

Der Ölkreislauf besteht aus einer Ölwanne 106, aus der über eine Saugleitung 108 mittels einer variablen Ölpumpe 110 Öl angesaugt wird. Dieses Öl strömt über eine Förderleitung 112 zum Zweck der Schmierung zu einem Verbrennungsmotor 114 und von diesem über eine Rückführleitung 116 zurück zur Ölwanne 106.

Wie erwähnt handelt es sich um eine regelbare Ölpumpe 110, bei der durch Verstellung eines Exzenterringes 118, in dem ein Pumpenrotor 120 zur Förderung gedreht wird, die Fördermenge und somit der Förderdruck p₁ eingestellt wird.

Die Verstellung des Exzenterringes 118 erfolgt durch Regelung eines Steuerdruckes in einer Steuerkammer 122 der Ölpumpe 110. Der in der Steuerkammer 122 wirkende Steuerdruck wird mittels der erfindungsgemäßen Ventilvorrichtung geregelt, indem der Regelanschluss 102 der Ventilvorrichtung über eine Steuerleitung 124 mit der Steuerkammer 122 verbunden wird, so dass am Regelanschluss 102 und in der Steuerkammer 122 immer der gleiche Steuerdruck herrscht. An der entgegengesetzten Seite des Exzenterringes 118 wirkt jeweils der Förderdruck der Ölpumpe 110. Der Auslassanschluss 100 der Ventilvorrichtung dient als Auslass zur Ölwanne 106. Der Einlassanschluss 98 und der axiale Anschluss mit dem Steuerkolben 88 werden jeweils mit einer Förderleitung der Ölpumpe 110 verbunden.

Im in der Figur dargestellten, nicht bestromten Zustand der Ventilvorrichtung wird der Anker 22 und somit der Regelschieber 84 aufgrund der Druckkraft des Federelementes 64 gegen den Anschlag 81 gedrückt. In diesem Zustand ist die fluidische Verbindung zwischen dem Auslassanschluss 100 und dem Regelanschluss 102 durch die zweite Steuerfläche 96 geschlossen, während der Einlassanschluss zumindest teilweise durch die erste Steuerfläche 94 freigegeben wird, so dass Öl mit dem Förderdruck p₁ zum Regelanschluss 102 gelangt. Dies hat einen erhöhten Druck in der Steuerkammer 122 und somit einen erhöhten Förderdruck der Ölpumpe 110 zur Folge, da der Exzenterring 118 immer weiter in Richtung zum maximalen Förderdruck verschoben wird.

Neben der Kraft des Federelementes 64 wirkt auf den Anker 22 über den Regelschieber 84, ein steigender Gegendruck aufgrund der Belastung des Steuerkolbens 88 mit dem steigenden Förderdruck. Erreicht der Förderdruck einen bestimmten Grenzwert, übersteigt diese durch den Förderdruck entstehende Gegenkraft die Federkraft, wodurch der Regelschieber 84 in Richtung der Aktoreinheit 10 verschoben wird, bis die Steuerfläche 94 den Einlassanschluss 98 verschließt, wodurch der Druckaufbau in der Steuerkammer 122 beendet wird.

In diesem Zustand sind somit alle Verbindungen zum Regelanschluss 102 verschlossen und es herrscht ein Kräftegleichgewicht zwischen der resultierenden Öldruckkraft am Steuerkolben 88 und der Federkraft des Federelementes 64. Dies hat zur Folge, dass kein Ölförderverlust auftritt, da kein Wechsel zwischen Abfluss und Zufluss des Öls zur Steuerkammer 122 notwendig ist.

Bei steigendem Druck der Ölpumpe 110 aufgrund steigender Drehzahlen des Verbrennungsmotors 114 tritt die Ölbegrenzungsfunktion in Kraft. Durch den am Steuerkolben 88 anliegenden Druck wird der Regelschieber weiter in Richtung der Aktoreinheit 10 verschoben, wodurch der Einlassanschluss 98 verschlossen wird und die Verbindung zwischen dem Regelanschluss 102 und dem Auslassanschluss 100 geöffnet wird. Somit fließt Öl aus der Steuerkammer 122 in die Ölwanne 106 ab, so dass der Druck in der Steuerkammer 122 fällt und somit die Förderleistung der Ölpumpe 110 sinkt. Dadurch sinkt der Druck am Steuerkolben 88 wieder ab, bis ein Kräftegleichgewicht zur Federkraft erreicht wird, was erneut einen Verschluss des Regelanschlusses 102 zur Folge hat. Es sei bemerkt, dass die Kraft, welche notwendig ist, um den Regelschieber 84 in seine verschließende Stellung zu verschieben, von der Federkraft abhängig ist, die über die Einstellschraube 50 eingestellt werden kann.

Zur Einstellung eines gewünschten Druckes kann der elektromagnetische Kreis 14 durch Bestromung der Spule 18 aktiviert werden. Die entstehende elektromagnetische Kraft wirkt entgegen der Federkraft, so dass für die den Regelanschluss 102 verschließende Position ein Kräftegleichgewicht zwischen der hydraulischen Kraft am Steuerkolben, der elektromagnetischen Kraft am Anker und der Federkraft vorliegen muss. Wird ein höherer Druck von der Motorsteuerung gefordert, wird der Strom in der Spule 18 reduziert, so dass die Magnetkraft sinkt und die Federkraft die hydraulische Kraft und die Magnetkraft übersteigt. Der Regelschieber 84 wird in seine den Einlassanschluss 98 freigebende Stellung verschoben, wodurch wiederum der Förderdruck steigt, steigt bis die hydraulische Kraft und die Magnetkraft die Federkraft überschreiten und die Verbindung zum Regelanschluss 102 erneut verschlossen wird.

Bei kleinen Drehzahlen des Verbrennungsmotors und somit geringem geforderten Öldruck wird die Stromzufuhr zur Spule erhöht und die Verbindung des Regelanschlusses 102 zum Auslassanschluss 100 geöffnet, bis der hydraulische Druck am Steuerkolben 88 so klein wird, dass der Regelschieber wieder in seine verschließende Position verschoben wird.

Aus alledem folgt, dass die Stromzufuhr im Wesentlichen entgegengesetzt proportional zum geforderten Öldruck erfolgen muss.

Durch die Durchgangslängsbohrung 82 und die Querbohrung 104 und dem daraus folgenden Druckausgleich im Ventilraum 86 und im Aktorraum 76 wirken auch keine sich ändernden zusätzlichen Kräfte auf den Regelschieber 84.

Des Weiteren ist ersichtlich, dass durch Änderung der Wirkfläche des Steuerkolbens 88 auch die auf den Regelschieber 84 wirkende hydraulische Kraft verändert werden kann. Somit ist es jedoch möglich, für verschiedene geforderte Maximaldrücke die gleiche Aktoreinheit 10 zu verwenden. Es ergibt sich eine einfache Regelbarkeit bei gleichzeitig verwirklichter Druckbegrenzungsfunktion im Ventil. Zusätzlich kann die notwendige Betätigungskraft durch die Einstellschraube 50 eingestellt werden.

Es sollte deutlich sein, dass sich diese Ventilvorrichtungen auch für andere Hydraulikkreisläufe eignen. Konstruktive Änderungen der Ventilvorrichtung im Vergleich zum dargestellten Ausführungsbeispiel, wie beispielsweise die einstückige Ausbildung von Anker, Regelschieber und Steuerkolben oder auch eine unterschiedliche Aufteilung der Gehäuse und ähnliches sind ebenfalls denkbar, ohne den Schutzbereich des Hauptanspruchs zu verlassen.

## Patentansprüche

1. Ventilvorrichtung für einen Hydraulikkreislauf mit einer Aktoreinheit (10) mit einem elektromagnetischen Kreis (14) bestehend aus einem translatorisch bewegbaren Anker (22), einem Kern (20), einer bestrombaren Spule (18), die auf einem Spulenträger (16) angeordnet ist und Flussleiteinrichtungen (24, 26, 28, 30),
einer Ventileinheit (12) mit einem Regelschieber (84), der mit dem Anker (22) verbunden ist, einem Auslassanschluss (100), einem weiter als der Auslassanschluss (100) von der Aktoreinheit (10) entfernten Einlassanschluss (98) und einem zwischen Einlassanschluss (98) und Auslassanschluss (100) angeordneten Regelanschluss (102), dessen fluidische Verbindung zum Einlassanschluss (98) und zum Auslassanschluss (100) über den Regelschieber (84) absperrbar oder freigebbar ist,
wobei der Anker (22) mittels eines Federelements (64) in Öffnungsrichtung des Einlassanschlusses (98) belastet ist und mittels des elektromagnetischen Kreises (14) sowie mittels eines Steuerkolbens (88), der in jeder Position des Regelschiebers (84) mit dem gleichen Druck wie der Einlassanschluss (98) beaufschlagt ist, so dass der Steuerkolben (88) mit einer vom Druck am Einlassanschluss (98) abhängigen hydraulischen Kraft beaufschlagt ist, über den Regelschieber (84) in Öffnungsrichtung des Auslassanschlusses (102) belastbar ist.

2. Ventilvorrichtung für einen Hydraulikkreislauf nach Anspruch 1,
**dadurch gekennzeichnet, dass**
der Regelschieber (84) eine erste Steuerfläche (94) aufweist, die zum Verschluss der fluidischen Verbindung zwischen dem Einlassanschluss (98) und dem Regelanschluss (102) dient und eine zweite Steuerfläche (96) aufweist, die zum Verschluss der fluidischen Verbindung zwischen dem Auslassanschluss (100) und dem Regelanschluss (102) dient, wobei der Abstand der beiden Steuerflächen (94, 96) zueinander geringer ist als der Abstand des Einlassanschlusses (98) zum Auslassanschluss (100).

3. Ventilvorrichtung für einen Hydraulikkreislauf nach Anspruch 2,
**dadurch gekennzeichnet, dass**
die Steuerflächen (94, 96) zylindrisch ausgebildet sind.

4. Ventilvorrichtung für einen Hydraulikkreislauf nach einem der vorhergehenden Ansprüche,
**dadurch gekennzeichnet, dass**
das Federelement (64) an seinem zum Anker (22) entgegengesetzten Ende gegen einen Absatz (60) einer Einstellschraube (50) anliegt, welche in einer Gewindebohrung im Kern befestigt ist.

5. Ventilvorrichtung für einen Hydraulikkreislauf nach Anspruch 4,
**dadurch gekennzeichnet, dass**
sich vom Absatz (60) der Einstellschraube (50) ein Vorsprung (62) in Richtung des Ankers (22) erstreckt, der von dem Federelement (64) umgeben ist.

6. Ventilvorrichtung für einen Hydraulikkreislauf nach einem der vorhergehenden Ansprüche,
**dadurch gekennzeichnet, dass**
am Kern (20) nicht magnetisierbare Anschlagmittel (66) befestigt sind, gegen die der Anker (22) in seiner vollständig angezogenen Position anliegt.

7. Ventilvorrichtung für einen Hydraulikkreislauf nach Anspruch 6,
**dadurch gekennzeichnet, dass**
eine Anschlaghülse (66) als Anschlagmittel dient, welche in einer Bohrung (42) des Kerns (20) angeordnet ist.

8. Ventilvorrichtung für einen Hydraulikkreislauf nach Anspruch 7 und 4 oder 5,
**dadurch gekennzeichnet, dass**
die Anschlaghülse (66) einen axialen Abschnitt des Federelements (64) radial umgibt.

9. Ventilvorrichtung für einen Hydraulikkreislauf nach einem der vorhergehenden Ansprüche,
**dadurch gekennzeichnet, dass**
der Regelschieber (84) und der Anker (22) eine Durchgangslängsbohrung (82) aufweisen, über welche ein Aktorraum (76) zwischen dem Anker (22) und dem Kern (20) fluidisch mit einem Ventilraum (86) am zur Aktoreinheit (10) entgegengesetzten Ende des Regelschiebers (84) verbunden ist.

10. Ventilvorrichtung für einen Hydraulikkreislauf nach Anspruch 9,
**dadurch gekennzeichnet, dass**
der Regelschieber (84) eine Querbohrung (104) aufweist, über die die Durchgangslängsbohrung (82) mit dem Auslassanschluss (100) verbunden ist.

11. Ventilvorrichtung für einen Hydraulikkreislauf nach einem der Ansprüche 9 oder 10,
**dadurch gekennzeichnet, dass**
im Ventilraum (86) der Steuerkolben (88) gelagert ist.

12. Ventilvorrichtung für einen Hydraulikkreislauf nach einem der vorhergehenden Ansprüche,
**dadurch gekennzeichnet, dass**
eine der Flussleiteinrichtungen als Rückschlussbuchse (30) ausgebildet ist, welche einen ersten axialen Abschnitt (32) aufweist, der radial innerhalb des Spulenträgers (16) angeordnet ist und einen zweiten axialen Abschnitt (36) aufweist, der einen Abschnitt eines Ventilgehäuses (38) der Ventileinheit (12) radial umgibt.

13. Ventilvorrichtung für einen Hydraulikkreislauf nach Anspruch 12,
**dadurch gekennzeichnet, dass**
radial innerhalb des ersten Abschnitts (32) der Rückschlussbuchse (30) eine Gleitbuchse (78) angeordnet ist, in welcher der Anker (22) gelagert ist.

14. Ventilvorrichtung für einen Hydraulikkreislauf nach einem der vorhergehenden Ansprüche,
**dadurch gekennzeichnet, dass**
zwischen dem Kern (20) und dem Spulenträger (16), zwischen der Einstellschraube (50) und dem Kern (20) und zwischen dem Spulenträger (16) und der Rückschlussbuchse (30) Dichtringe (34, 58, 74) angeordnet sind.

15. Ölpumpenregelanordnung mit einer Ventilvorrichtung nach einem der vorhergehenden Ansprüche, einer variablen Ölpumpe (110) mit einer Steuerkammer (122) und einer Ölwanne (106),
**dadurch gekennzeichnet, dass**
der Regelanschluss (102) mit der Steuerkammer (122) der Ölpumpe (110) fluidisch verbunden ist, der Auslassanschluss (100) mit der Ölwanne (106) fluidisch verbunden ist und der Einlassanschluss (98) und der Steuerkolben (88) (122) mit dem Förderdruck der Ölpumpe (110) beaufschlagt ist.

## Claims

1. Valve device for a hydraulic circuit comprising
An actuator unit (10) with an electromagnetic circuit (14) consisting of a translationally movable armature (22), a core (20), an energizable coil (18) arranged on a coil carrier (16) and flux guiding means (24, 26, 28, 30),
a valve unit (12) with a regulating valve (84) connected with the armature (22), an outlet port (100), an inlet port (98) more distant from the actuator unit (10) than the outlet port (100), and a regulating port (102) arranged between the inlet port (98) and the outlet port (100), the fluidic connection of the regulating port with the inlet port (98) and the outlet port (100) being configured to be blocked or opened by means of the regulating valve (84),
wherein the armature (22) is biased in the opening direction of the inlet port (98) by means of a spring element (64) and is adapted to be biased in the opening direction of the outlet port (102) by means of the regulating valve (84) using the electromagnetic circuit (14), as well as a control piston (88) which, in every position of the regulating valve (84), is subjected to the same pressure as the inlet port (98) so that the control piston (88) is subjected to a hydraulic force depending on the pressure at the inlet port (98).

2. Valve device for a hydraulic circuit of claim 1, **characterized in that** the regulating valve (84) has a first control surface (94) serving to close the fluidic connection between the inlet port (98) and the regulating port (102), and comprises a second control surface (96) serving to close the fluidic connection between the outlet port (100) and the regulating port (102), wherein the distance between the two control surfaces (94, 96) is smaller than the distance of the inlet port (98) to the outlet port (100).

3. Valve device for a hydraulic circuit of claim 2, **characterized in that** the control surfaces (94, 96) are cylindrical in shape.

4. Valve device for a hydraulic circuit of one of the preceding claims, **characterized in that**, at its end opposite the armature (22), the spring element (64) abuts against a shoulder (60) of an adjusting screw (50) mounted in a threaded bore in the core.

5. Valve device for a hydraulic circuit of claim 4, **characterized in that** a protrusion (62) extends from the shoulder (60) of the adjusting screw (50) towards the armature (22), said protrusion being surrounded by the spring element (64).

6. Valve device for a hydraulic circuit of one of the preceding claims, **characterized in that** non-magnetizable stop means (66) are fastened to the core (20), against which the armature (22) abuts in its fully attracted position.

7. Valve device for a hydraulic circuit of claim 6, **characterized in that** a stop bushing (66) serves as the stop means, which stop bushing is arranged in a bore (42) of the core (20).

8. Valve device for a hydraulic circuit of claim 7 and 4 or 5, **characterized in that** the stop bushing (66) radially surrounds an axial section of the spring element (64).

9. Valve device for a hydraulic circuit of one of the preceding claims, **characterized in that** the regulating valve (84) and the armature (22) have a longitudinal throughbore (82) via which an actuator space (76) between the armature (22) and the core (20) is fluidically connected with a valve space (86) at the end of the regulating valve (84) opposite the actuator unit (10).

10. Valve device for a hydraulic circuit of claim 9, **characterized in that** the regulating valve (84) has a transversal bore (104) via which the longitudinal throughbore (82) is connected with the outlet port (100).

11. Valve device for a hydraulic circuit of one of claims 9 or 10, **characterized in that** the control piston (88) is supported in the valve space (86).

12. Valve device for a hydraulic circuit of one of the preceding claims, **characterized in that** one of the flux guiding means is configured as a magnetic feedback bushing (30) having a first axial section (32) arranged radially within the coil carrier (16) and a second axial section (36) radially surrounding a section of a valve housing (38) of the valve unit (12).

13. Valve device for a hydraulic circuit of claim 12, **characterized in that** a sliding bushing (78) is arranged radially within the first section (32) of the magnetic feedback bushing (30), the armature (22) being supported in said sliding bushing.

14. Valve device for a hydraulic circuit of one of the preceding claims, **characterized in that** seal rings (34, 58, 74) are arranged between the core (20) and the coil carrier (16), between the adjusting screw (50) and the core (20) and between the coil carrier (16) and the magnetic feedback bushing (30).

15. Oil pump control system comprising a valve device for a hydraulic circuit of one of the preceding claims, a variable oil pump (110) with a control chamber (122) and an oil sump (106), **characterized in that** the regulating port (102) is fluidically connected with the control chamber (122) of the oil pump (110), the outlet port (100) is fluidically connected with the oil sump (106), and the inlet port (98) and the control piston (88) are subjected to the feed pressure of the oil pump (110).

## Revendications

1. Dispositif formant vanne pour un circuit hydraulique, avec
une unité d'actionneur (10) avec un circuit électromagnétique (14) formé par une armature (22) déplaçable en translation, un noyau (20), une bobine (18) apte à être alimentée en courant et situé sur une porte-bobine (16), et des moyens déflecteurs de flux (24, 26, 28, 30),
une unité de vanne (12) avec une vanne de réglage (84) reliée à l'armature (22), un port de sortie (100), un port d'admission (98) plus loin de ladite unité d'actionneur (10) que le port de sortie (100), et un port de réglage (102) disposé entre ledit port d'admission (98) et ledit port de sortie (100), la liaison fluidique du port de réglage avec ledit port d'admission (98) et ledit port de sortie (100) pouvant être bloquée ou ouverte par la vanne de réglage (84),
l'armature (22) étant sollicité dans la direction d'ouverture du port d'admission (98) par un élément de ressort (64) et pouvant être sollicité dans la direction d'ouverture du port de sortie (102) par la vanne de réglage (84) et par le circuit électromagnétique (14) ainsi qu'un piston de commande (88) sur lequel est appliqué, dans chaque position de la vanne de réglage (84), la même pression que sur le port d'admission (98) de sorte qu'une force hydraulique est appliquée sur le piston de commande (88), la force étant dépendante de la pression au port d'admission (98).

2. Dispositif formant vanne pour un circuit hydraulique selon la revendication 1, **caractérisé en ce que** la vanne de réglage (84) comprend une première surface de commande (94) servant à bloquer la liaison fluidique entre le port d'admission (98) et le port de réglage (102), et une deuxième surface de commande (96) servant à bloquer la liaison fluidique entre le port de sortie (100) et le port de réglage (102), la distance entre les deux surfaces de commande (94, 96) est inférieure à la distance du port d'admission au port de sortie (100).

3. Dispositif formant vanne pour un circuit hydraulique selon la revendication 2, **caractérisé en ce que** les surfaces de commande (94, 96) sont cylindriques.

4. Dispositif formant vanne pour un circuit hydraulique selon l'une quelconque des revendications précédentes, **caractérisé en ce qu'**à son extrémité opposée à l'armature (22), ledit élément de ressort (64) repose sur un épaulement (60) d'une vis d'ajustage (50) montée dans un trou taraudé dans le noyau.

5. Dispositif formant vanne pour un circuit hydraulique selon la revendication 4, **caractérisé en ce qu'**une saillie (62) s'étend dudit épaulement (60) de ladite vis d'ajustage (50) vers l'armature (22), la saillie étant entourée par ledit élément de ressort (64).

6. Dispositif formant vanne pour un circuit hydraulique selon l'une quelconque des revendications précédentes, **caractérisé en ce que** des moyens de butée (66) non-magnétisables sont fixés au noyau (20) contre lesquels repose l'armature (22) dans sa position complètement attirée.

7. Dispositif formant vanne pour un circuit hydraulique selon la revendication 6, **caractérisé en ce qu'**une douille de butée (66) sert comme moyen de butée, ladite douille étant disposée dans un alésage (42) du noyau (20).

8. Dispositif formant vanne pour un circuit hydraulique selon la revendication 7 et 4 ou 5, **caractérisé en ce que** la douille de butée (66) radialement entoure une section axiale dudit élément de ressort (64).

9. Dispositif formant vanne pour un circuit hydraulique selon l'une quelconque des revendications précédentes, **caractérisé en ce que** la vanne de réglage (84) et l'armature (22) comprennent un trou traversant (82) par lequel un espace d'actionneur (76) entre l'armature (22) et le noyau (20) est en liaison fluidique avec un espace de vanne (86) à l'extrémité de la vanne de réglage (84) opposée l'unité d'actionneur (10).

10. Dispositif formant vanne pour un circuit hydraulique selon la revendication 9, **caractérisé en ce que** la vanne de réglage (84) comprend un alésage transversal (104) par lequel le trou traversant (82) est relié au port de sortie (100).

11. Dispositif formant vanne pour un circuit hydraulique selon l'une quelconque des revendications 9 ou 10, **caractérisé en ce que** le piston de commande (88) est supporté dans l'espace de vanne (86).

12. Dispositif formant vanne pour un circuit hydraulique selon l'une quelconque des revendications précédentes, **caractérisé en ce qu'**un des moyens déflecteurs de flux est conçu comme une douille de retour de flux magnétique (30) ayant une première section axiale disposée à l'intérieur de la porte-bobine (16) et une deuxième section axiale (36) radialement entourant une section d'un boitier de vanne (38) de l'unité de vanne (12).

13. Dispositif formant vanne pour un circuit hydraulique selon la revendication 12, **caractérisé en ce qu'**une douille de glissement (78) est disposée radialement à l'intérieur de la première section (32), l'armature (22) étant supporté dans cette douille.

14. Dispositif formant vanne pour un circuit hydraulique selon l'une quelconque des revendications précédentes, **caractérisé en ce que** des bagues d'étanchéité (34, 58, 74) sont disposées entre le noyau (20) et la porte-bobine (16), entre la vis d'ajustage (50) et le noyau (20) et entre la porte-bobine (16) et douille de retour de flux magnétique (30).

15. Système de contrôle de pompe à huile avec un dispositif formant vanne pour un circuit hydraulique selon l'une quelconque des revendications précédentes, une pompe à huile (110) variable avec une chambre de commande (122) et un carter d'huile (106), **caractérisé en ce que** le port de réglage (102) est en liaison fluidique avec la chambre de commande (122) de la pompe à huile (110), le port de sortie (100) est en liaison fluidique avec le carter d'huile (106), et le port d'admission (98) et le piston de commande (88) sont mises sous la pression de refoulement de la pompe à huile (110).
